# EUROPEAN PATENT APPLICATION

(11) **EP 2 922 123 A1**
(43) Date of publication of application: **23.09.2015**
(21) Application number: 13855429.0
(22) Date of filing: 18.11.2013
(51) Int. Cl.: H01M 4/66, H01G 11/68, H01M 4/13, H01M 4/64

(54) **COLLECTOR, ELECTRODE, SECONDARY CELL, AND CAPACITOR**

(30) Priority: 19.11.2012 JP 2012253756
(71) Applicant: Furukawa Electric Co., Ltd., Chiyoda-ku Tokyo 100-8322 (JP); UACJ Foil Corporation, Chuo-ku Tokyo 1030026 (JP); UACJ Corporation, Chiyoda-ku, Tokyo (JP)
(72) Inventor: IIDA, Takahiro, Tokyo 100-8322 (JP); MORISHIMA, Yasumasa, Tokyo 100-8322 (JP); ITO, Takayori, Tokyo 100-8322 (JP); HARA, Hidekazu, Tokyo 100-8322 (JP); KATAOKA, Tsugio, Kusatsu-shi, Shiga 525-0042 (JP); YAMABE, Satoshi, Kusatsu-shi, Shiga 525-0042 (JP); INOUE, Mitsuya, Kusatsu-shi, Shiga 525-0042 (JP); KATO, Osamu, Tokyo 101-8970 (JP); SAITO, Sohei, Tokyo 101-8970 (JP); HONKAWA, Yukiou, Tokyo 101-8970 (JP); YAEGASHI, Tatsuhiro, Tokyo 101-8970 (JP)
(74) Representative: Gulde & Partner
(86) International application number: PCT/JP2013/081024
(87) International publication number: WO 2014/077384

(57) **Abstract**

A current collector which can realize sufficient safety function even when the cell is deformed by external force or when the internal pressure is increased; and an electrode, a secondary battery, and a capacitor using the current collector; are provided. A current collector, including: a metal foil; and a conductive layer formed on a surface of the metal foil; is provided. Here, regarding the current collector, a temperature-resistance curve of the current collector obtained by sandwiching the current collector in between brass electrodes of 1cm diameter, the measurement of resistance being performed with conditions of 15N of load between the electrodes and temperature being raised from ambient temperature at a rate of 10°C/min satisfies a relation of R_{(Ta+5)}/R_{(Ta-5)} ≥ 1, R_{(Ta+5)} being resistance at temperature Ta+5°C and R_{(Ta-5)} being resistance at temperature Ta-5°C, Ta being a temperature higher than a temperature satisfying a relation of (R_{(T)} /R_{(T-5)}) > 2.0 and first satisfying a relation of (R_{(T)}/R_{(T-5)}) < 2.0.

## Description

### TECHNICAL FIELD

The present invention relates to current collectors, electrodes, secondary batteries, and capacitors.

### BACKGROUND

Application of lithium ion batteries has been expanding in the fields of electronic equipments such as mobile phones and lap-top computers, owing to the high energy density. Lithium ion batteries use lithium cobalt oxide, lithium manganese oxide, lithium iron phosphate and the like as the positive electrode active material; and use graphite and the like as the negative electrode active material. Lithium ion batteries are generally structured with an electrode comprising these active materials, a porous sheet as a separator, and an electrolyte solution obtained by dissolving a lithium salt. Such lithium ion batteries have high battery capacity and battery output, excellent charge/discharge characteristics, and relatively long durability.

Lithium ion batteries are advantageous in terms of high energy density, however, are problematic in terms of safety since they use non-aqueous electrolyte solution. For example, the component of the non-aqueous electrolyte solution contained would decompose due to heat generation, resulting in the increase in the inner pressure. This would cause defects such as expanded batteries. In addition, when the lithium ion battery is overcharged, defects such as heat generation can occur. Internal short circuit can also result in defects such as heat generation.

As a measure to improve safety of batteries, a technique to prevent increase in the internal pressure by using a safety valve, and a technique to install a PTC (Positive temperature coefficient) element which shows higher resistance when the temperature rises, thereby cutting off the current when abnormal heat generation occur, can be mentioned. For example, the PTC element can be fixed on a positive cap of a cylindrical battery.

However, regarding the measure of fixing the PTC element onto the positive cap, the electrode as the major heat-generating element and the PTC element are located away from each other when the abnormal heat generation occur. Accordingly, the responsiveness of the PTC element against heat generation becomes low, and is thus insufficient to prevent heat generation.

The resin of the separator fixed to the lithium ion battery fuses when abnormal heat generation occur, thereby blocking the pores of the separator to decrease ionic conductivity. Accordingly, the separator has a function to suppress the current increase when short circuit occurs. However, when the separator is located apart from the heat-generating portion, the resin may not fuse. In addition, the heat would cause the separator to shrink, and can rather cause short circuit. Therefore, the measure for preventing abnormal heat generation due to overcharge and the like still had room for improvement.

In order to prevent abnormal heat generation due to overcharge, a positive electrode having a PTC layer comprising a crystalline resin and conductive particles has been suggested. With such PTC layer, the crystalline resin would expand at a temperature near its melting point, thereby cutting the network of the conductive particles. Accordingly, the resistance of the PTC layer increases drastically near the melting point. In Patent Literature 1, carbon particles and crystalline resin are heated and mixed, followed by processing of the resulting mixture into a sheet form. Subsequently, the sheet is annealed, thereby giving a PTC layer formed on a current collector. In Patent Literature 2, a PTC layer of 5µm or less, comprising a crystalline resin such as polyethylene, conductive material, and a binder, is disclosed. In Patent Literature 3, a PTC layer comprising a polyethylene wax emulsion and carbon fine particles is disclosed. In Patent Literature 4, variation in pressure during high rate operation is disclosed.

### CITATION LIST

### PATENT LITERATURE

Patent Literature 1: JP 2002-526897A
Patent Literature 2: JP 2001-357854A
Patent Literature 3: JP 2009-176599A
Patent Literature 4: WO2011-077564A

### SUMMARY OF THE INVENTION

### TECHNICAL PROBLEM

However, the afore-mentioned conventional techniques had room for improvement in view of the following points.

First of all, regarding the PTC layer prepared by the method disclosed in Patent Literature 1, the carbon particles would disperse in the resin during heating, and thus it is defective in terms of high initial resistance. In addition, the thickness of the PTC layer prepared by such method is several tens of µm, and cannot avoid being thick as the active material layer. The electrode of the lithium ion battery is desired to have more energy density. However, when the PTC layer is thick, the energy capacity decreases.

Secondly, the PTC layer disclosed in Patent Literature 2 was defective since the active material and the like would penetrate the PTC layer when pressure is applied to the active material layer due to deformation and the like. In such cases, the resistance would not increase sufficiently, and thus the current cannot be cut off to prevent heat generation.

Thirdly, the PTC layer disclosed in the Example of Patent Literature 3 was problematic since it uses polyethylene wax. That is, when pressure is applied to the PTC layer due to expansion of the active material layer and the like, the PTC layer would be easily crushed, and thus the resistance cannot be increased to prevent heat generation. In addition, the PTC layer disclosed in the Example of Patent Literature 3 was problematic since the emulsion fused when heated up to temperatures above its melting point, resulting in deterioration of the PTC characteristics. Accordingly, the coating need be dried at temperatures not exceeding the melting point of the emulsion, resulting in drastic decrease in productivity.

In addition, Patent Literature 4 discloses that the pressure applied onto the electrode body (positive electrode, negative electrode, and separator) under high rate conditions is in the range of 0.5 to 12 MPa. Accordingly, when pressure is applied to the electrode, PTC layer having low pressure resistance would deform by the pressure. Therefore, it can be assumed that PTC function cannot be realized during high rate operation.

The present invention has been made by taking the afore-mentioned circumstances into consideration. An object of the present invention is to provide a current collector which can realize sufficient safety function when pressure is applied to the current collector or when the internal pressure rises; and to provide an electrode, secondary battery, or a capacitor using the current collector. In addition, another object of the present invention is to provide a current collector having the PTC characteristics which does not deteriorate even when the drying temperature is at or above the melting point of the emulsion, and can realize sufficient safety function even when abnormal heat generation occurs due to overcharging; and to provide an electrode, secondary battery, or a capacitor using the current collector.

### SOLUTION TO PROBLEM

According to the present invention, a current collector, comprising a metal foil, and a conductive layer formed on a surface of the metal foil, is provided. Here, regarding the current collector, a temperature-resistance curve of the current collector obtained by sandwiching the current collector in between brass electrodes of 1cm diameter, the measurement of resistance being performed with conditions of 15N of load between the electrodes and temperature being raised from ambient temperature at a rate of 10°C/min satisfies a relation of R_{(Ta+5)}/R_{(Ta-5)} ≥ 1, R_{(Ta+5)} being resistance at temperature Ta+5°C and R_{(Ta-5)} being resistance at temperature Ta-5°C, Ta being a temperature higher than a temperature satisfying a relation of (R_{(T)}/R_{(T-s)}) > 2.0 and first satisfying a relation of (R_{(T)}/R_{(T-5)}) < 2.0.

Such current collector can achieve excellent PTC characteristics even when pressure is applied. Accordingly, when such current collector is used, high productivity can be achieved, and sufficient safety function can be sufficiently realized even when overcharging occurs in a condition where the cell deforms due to the external force applied from the secondary battery or the capacitor or in a condition where the internal pressure increases.

In addition, according to the present invention, an electrode, comprising the afore-mentioned current collector, and an active material layer comprising an active material, the active material layer formed on the conductive layer of the current collector, is provided.

Such electrode comprises the afore-mentioned current collector. Accordingly, high productivity can be achieved, and sufficient safety function can be realized even when overcharging occurs in a condition where pressure is applied to the electrode of the secondary battery or the capacitor.

In addition, according to the present invention, a lithium secondary battery, a non-aqueous lithium secondary battery, an electrical double layer capacitor, or a lithium ion capacitor comprising the afore-mentioned current collector, is provided.

Such lithium secondary battery, non-aqueous lithium secondary battery, electrical double layer capacitor, and lithium ion capacitor comprise the afore-mentioned current collector. Accordingly, high productivity can be achieved, and sufficient safety function can be realized even when overcharging occurs in a condition where pressure is applied to the electrode of the secondary battery or the capacitor.

### EFFECT OF THE INVENTION

According to the present invention, a current collector which can realize sufficient safety function even when pressure is applied to the electrode when the cell is deformed by external force or when the electrode is in a high rate operation; an electrode, a secondary battery or a capacitor using the current collector can be manufactured with high productivity.

### BRIEF DESCRIPTION OF THE DRAWINGS

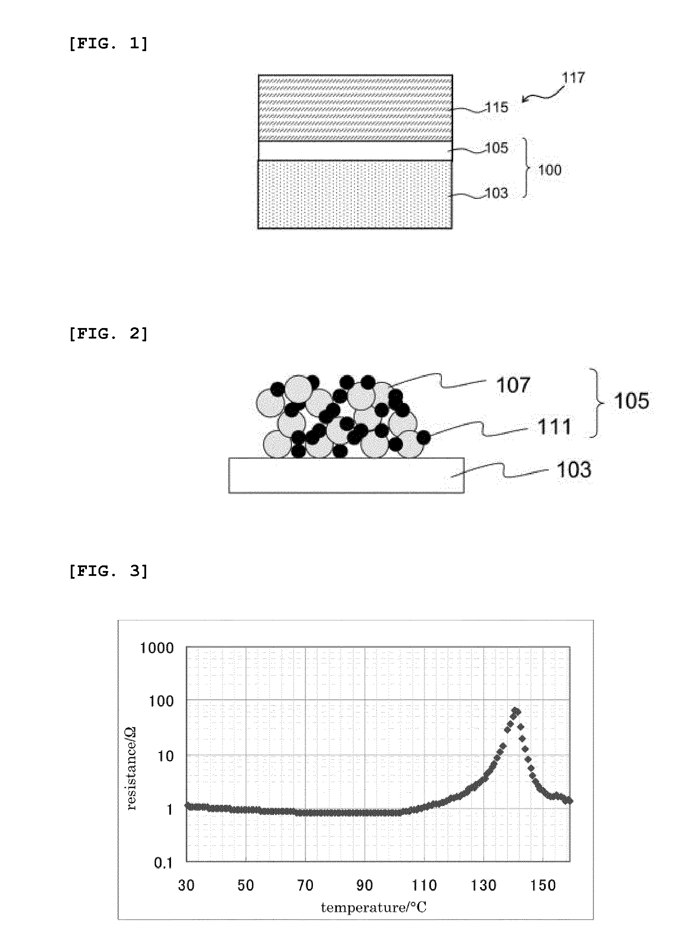

[FIG. 1] FIG. 1 is a cross-sectional view showing a structure of an electrode.
[FIG. 2] FIG. 2 is a cross-sectional view for explaining conductive material and binder material contained in the conductive layer without inorganic non-conductive material.
[FIG. 3] FIG. 3 is a graph showing a temperature-resistance curve of a current collector, the current collector comprising a conductive layer without silica dried at 100°C for 1 minute being sandwitched in between brass electrodes of 1 cm diameter, and the measurement being performed with the conditions of 15N of load between the electrodes and temperature rising from ambient temperature at the rate of 10°C/min.

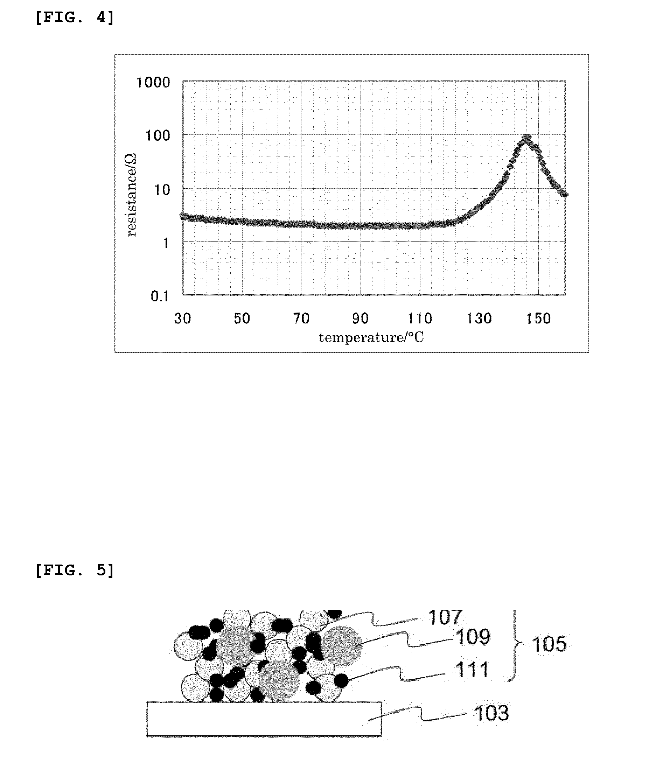

[FIG. 4] FIG. 4 is a graph showing a temperature-resistance curve of a current collector, the current collector comprising a conductive layer without silica dried at 140°C for 1 minute being sandwitched in between brass electrodes of 1 cm diameter, and the measurement being performed with the conditions of 15N of load between the electrodes and temperature rising from ambient temperature at the rate of 10°C/min.
[FIG. 5] FIG. 5 is a cross-sectional view for explaining conductive material, inorganic non-conductive material and binder material contained in the conductive layer of the electrode according to the present embodiment.

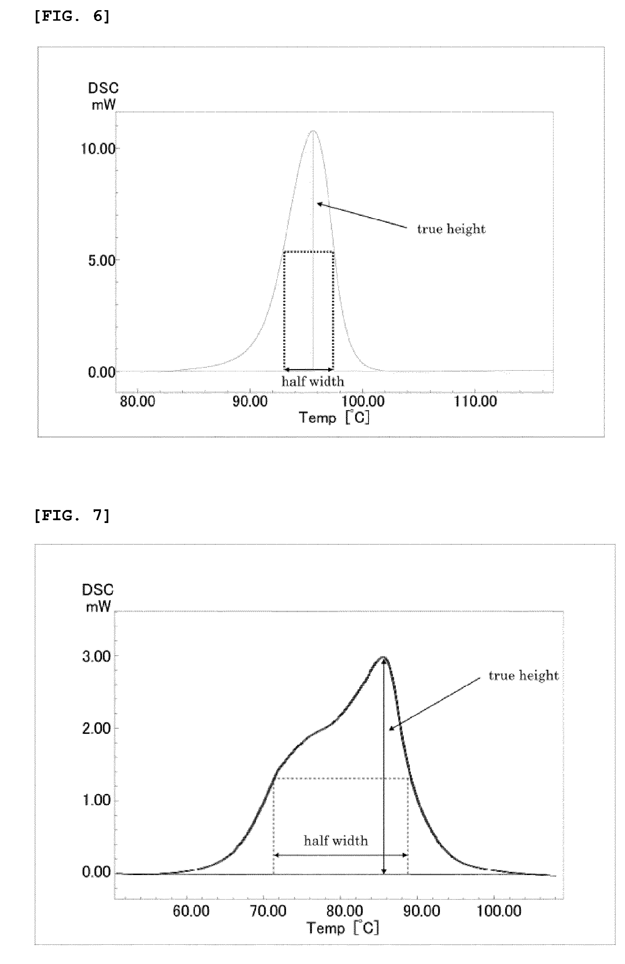

[FIG. 6] FIG. 6 is a graph for explaining a half width of the maximum exothermic peak observed with the binder material of the conductive layer of the electrode according to the present embodiment.
[FIG. 7] FIG. 7 is another graph for explaining a half width of the maximum exothermic peak observed with the binder material of the conductive layer of the electrode according to the present embodiment.

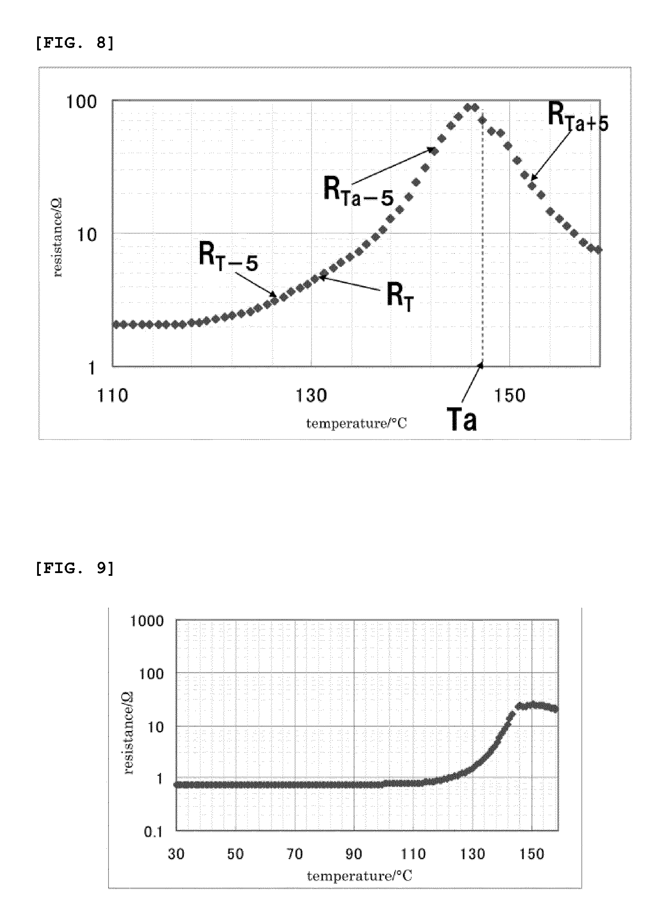

[FIG. 8] FIG. 8 is a conceptual diagram for explaining the procedure for obtaining T, R_{(T-5)}, R_{(T)}, Ta, R_{(Ta-5)}, R_{(Ta+5)} in the temperature-resistance curve of a current collector, the current collector being sandwitched in between brass electrodes of 1 cm diameter, and the measurement being performed with the conditions of 15N of load between the electrodes and temperature rising from ambient temperature at the rate of 10°C/min.
[FIG. 9] FIG. 9 is a graph showing a temperature-resistance curve of a current collector, the current collector comprising a conductive layer added with silica (silica 10vol%) being sandwitched in between brass electrodes of 1 cm diameter, and the measurement being performed with the conditions of 15N of load between the electrodes and temperature rising from ambient temperature at the rate of 10°C/min.

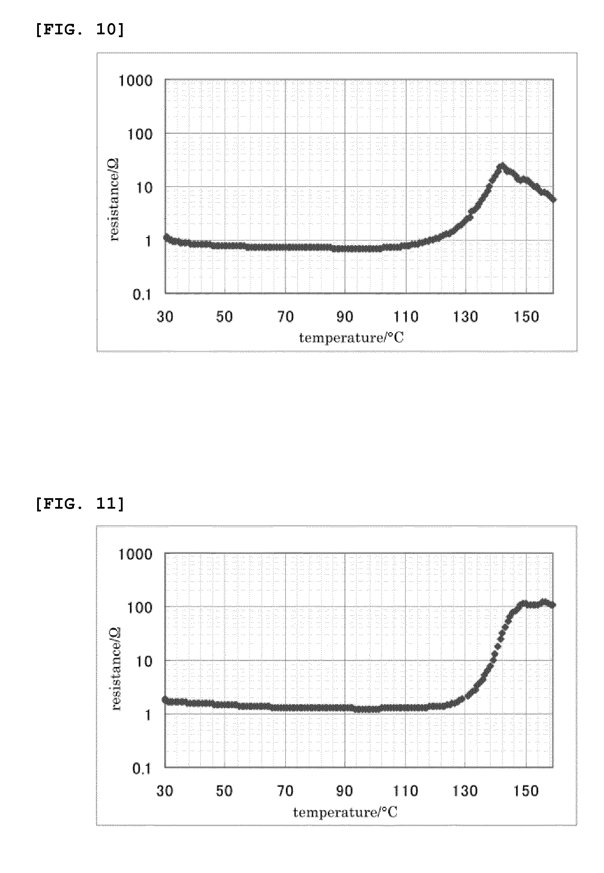

[FIG. 10] FIG. 10 is a graph showing a temperature-resistance curve of a current collector, the current collector comprising a conductive layer added with silica (silica 5vol%) dried at 100°C for 1 minute being sandwitched in between brass electrodes of 1 cm diameter, and the measurement being performed with the conditions of 15N of load between the electrodes and temperature rising from ambient temperature at the rate of 10°C/min.
[FIG. 11] FIG. 11 is a graph showing a temperature-resistance curve of a current collector, the current collector comprising a conductive layer added with silica (silica 5vol%) dried at 140°C for 1 minute being sandwitched in between brass electrodes of 1 cm diameter, and the measurement being performed with the conditions of 15N of load between the electrodes and temperature rising from ambient temperature at the rate of 10°C/min.

### DESCRIPTION OF EMBODIMENTS

Hereinafter, the embodiments of the present invention will be explained with reference to the drawings. Here, in all of the drawings, the same symbols are provided for the similar constitutional elements, and the explanations for them are omitted where applicable. In addition, "A to B" in the present specification shall mean "A or more and B or less".

### <Reference: Current Collector Having Conductive Layer Without Inorganic Non-conductive Material>

FIG. 1 is a cross-sectional view showing a structure of an electrode. Further, FIG. 2 is a cross-sectional view for explaining conductive material and binder material contained in the conductive layer without inorganic non-conductive material. Current collector 100 comprises a metal foil 103, and a conductive layer 105 (thickness of 0.1 to 10µm) formed on the surface of the metal foil 103. Electrode 117 further comprises an active material layer 115 containing an active material, the active material layer 115 being provided on the conductive layer 105 of the current collector 100. As shown in FIG. 2, the conductive layer 105 includes the conductive material 111 and the binder material 107.

FIG. 3 is a graph showing a temperature-resistance curve of a current collector, the current collector comprising a conductive layer without silica dried at 100°C for 1 minute being sandwitched in between brass electrodes of 1 cm diameter, and the measurement being performed with the conditions of 15N of load between the electrodes and temperature rising from ambient temperature at the rate of 10°C/min. As apparent from FIG. 3, when the conductive layer 105 of the current collector having the structure of FIG. 2 is not treated, the PTC magnification is relatively high as 58.1.

In addition, as apparent from FIG. 3, when the current collector 100 having the structure of FIG. 2 is applied with a force of 15N and the temperature is raised, there is not much of a change in the resistance before the temperature reaches the fusing temperature of the binder material 107. Then, around the fusing temperature of the binder material 107, the resistance increases once since the conductive pathway of the conductive material 111 is cut off due to the expansion of the binder material 107. However, when the temperature is further raised, the binder material 107 suddenly softens (elasticity suddenly decreases), and thus the conductive layer 105 is easily crushed, thereby allowing connection of the conductive pathway by the re-aggregation of the conductive material 111. Therefore, the resistance would decrease again, and the heat generation cannot be prevented. That is, the safety function cannot be sufficiently realized in a case where overcharging occurs when the secondary battery or the capacitor is deformed or when the current collector is applied with pressure. From such experimental results, the present inventors have noticed that the elasticity of the fused conductive layer 105 need be made higher.

FIG. 4 is a graph showing a temperature-resistance curve of a current collector, the current collector comprising a conductive layer without silica dried at 140°C for 1 minute being sandwitched in between brass electrodes of 1 cm diameter, and the measurement being performed with the conditions of 15N of load between the electrodes and temperature rising from ambient temperature at the rate of 10°C/min. As apparent from FIG. 4, the magnification of PTC would decrease to 28.2 when the current collector having the structure of FIG. 2 is dried at a temperature at or over the melting point of the conductive layer 105. From such experimental results, the present inventors have noticed that the conductive layer 105 of the current collector having the structure of FIG. 2 need be dried at low temperature in order to prevent deterioration in the PTC characteristics, which would result in decrease in productivity.

### <Embodiment: Current Collector Having Conductive Layer Added With Inorganic Non-conductive Material>

FIG. 1 is a cross-sectional view showing a structure of an electrode. In addition, FIG. 5 is a cross-sectional view showing the conductive layer of the electrode according to the present embodiment. The current collector 100 used in electrode 117 of the present embodiment comprises a metal foil 103, and a conductive layer 105 (thickness of 0.1 to 10µm) formed on the surface of the metal foil 103. Electrode 117 of the present embodiment further comprises an active material layer 115 containing an active material, the active material layer 115 being provided on the conductive layer 105 of the current collector 100.

Here, as shown in FIG. 5, the conductive layer 105 comprises a conductive material 111, an inorganic non-conductive material 109, and a binder material 107.

FIGs. 6 and 7 are graphs for explaining a half width of the maximum exothermic peak observed with the binder material of the conductive layer of the electrode according to the present embodiment. The melting point of the binder material 107 is in the range of 80 to 180°C. In addition, as shown in FIGs. 6 and 7, the binder material 107 has a maximum exothermic peak in the temperature range of 50 to 160°C during the cooling process after the crystal fuses in the differential scanning calorimetry (DSC) measurement. Here, the half width of the maximum exothermic peak is 10°C or less.

FIG. 8 is a conceptual diagram for explaining the procedure for obtaining T, R_{(T-5)}, R_{(T)}, Ta, R_{(Ta-5)}, R_{(Ta+5)} in the temperature-resistance curve of a current collector, the current collector being sandwitched in between brass electrodes of 1 cm diameter, and the measurement being performed with the conditions of 15N of load between the electrodes and temperature rising from ambient temperature at the rate of 10°C/min. As shown in FIG. 8, the temperature at which the resistance R_{(T)} at temperature T and the resistance R_{(T-5)} at temperature T-5°C in the temperature-resistance curve of a current collector first satisfies the relation of (R_{(T)} /R_{(T-5)}) > 2.0 is taken as Tb. Then, the temperature higher than Tb and first satisfies the relation of (R_{(T)}/R_{(T-5)}) < 2.0 is taken as Ta. Here, the temperature-resistance curve of a current collector is obtained with the current collector being sandwitched in between brass electrodes of 1 cm diameter, and the measurement being performed with the conditions of 15N of load between the electrodes and temperature rising from ambient temperature at the rate of 10°C/min.

As mentioned before, the graph of temperature (°C)-resistance (Ω) is used to confirm whether the current collector of the electrode 117 of the present embodiment satisfies the relation of R_{(Ta+5)}/R_{(Ta-5)} ≥ 1 by the following procedures. Here, the resistance R at temperature T is shown as R_{(T)}, and the resistance R at temperature T-5°C is shown as R_{(T-5)}.
(1) : The temperature at which R_{(T)} exceeds twice of R_{(T-5)} is taken as Tb.
(2): The temperature higher than Tb and first satisfies the relation of (R_{(T)}/R_{(T-5)}) < 2.0 is taken as Ta.
(3): Resistance at Ta+5°C, R_{(Ta+5)} and the resistance at Ta-5°C, R_{(Ta-5)} are obtained.
(4): Confirmation is made on whether the relation of R_{(Ta+5)} /R_{(Ta-5)} ≥ 1 is satisfied or not.

By satisfying such conditions, the resistance can be increased sufficiently even when pressure is applied to the PTC layer due to the deformation of the cell or volume expansion of the active material. Accordingly, shut down function is desirably realized. When the relation of R_{(Ta+5)}/R_{(Ta-5)} < 1 is satisfied, the resistance would not be increased sufficiently when the pressure is applied onto the PTC layer. Accordingly, it is difficult to realize the shut down function.

FIG. 9 is a graph showing a temperature-resistance curve of a current collector, the current collector comprising a conductive layer added with silica being sandwitched in between brass electrodes of 1 cm diameter, and the measurement being performed with the conditions of 15N of load between the electrodes and temperature rising from ambient temperature at the rate of 10°C/min. As apparent from FIG. 9, when the current collector 100 having the structure of FIG. 5 is used, the conductive pathway of the conductive material 111 is cut off due to the expansion of the binder material 107 occurring around the fusing temperature of the binder material 107. Accordingly, the resistance increases, thereby cutting off the current. Then, when the temperature is further raised, the inorganic non-conducting material 109 would suppress the transfer of the conductive material 111 even when the binder material 107 is softened. Therefore, the re-aggregation of the conductive material 11 can be prevented and the resistance would not decrease, maintaining the cut off of the current between the current collector and the active material layer 115.

From such experimental results, the present inventors have noticed that the pressure resistance of the conductive layer 105 was largely improved, and the decrease in resistance was suppressed at temperatures exceeding the fusing point of the binder 107. That is, the present inventors have noticed that, by using the current collector 100 having the conductive layer 105 added with silica, safety function can be sufficiently realized even when overcharging occurs in a condition where the cell deforms due to the external force applied from the secondary battery or the capacitor, or in a condition where the internal pressure increases.

FIG. 10 is a graph showing a temperature-resistance curve of a current collector, the current collector comprising a conductive layer added with silica (silica 5vol%) dried at 100°C for 1 minute being sandwitched in between brass electrodes of 1 cm diameter, and the measurement being performed with the conditions of 15N of load between the electrodes and temperature rising from ambient temperature at the rate of 10°C/min. As apparent from FIG. 10, when the conductive layer 105 of the current collector 100 having the structure of FIG. 5 is kept without treatment, the PTC magnification is not that much high as 20.5.

FIG. 11 is a graph showing a temperature-resistance curve of a current collector, the current collector comprising a conductive layer added with silica (silica 5vol%) dried at 140°C for 1 minute being sandwitched in between brass electrodes of 1 cm diameter, and the measurement being performed with the conditions of 15N of load between the electrodes and temperature rising from ambient temperature at the rate of 10°C/min. As apparent from FIG. 11, when the conductive layer 105 of the current collector of FIG. 5 is dried at 140°C, a temperature at which the binder material would fuse, the PTC magnification remarkably improves as to 64.0. From such experimental results, the present inventors have noticed that the PTC characteristics of the conductive layer 105 of the current collector having the structure of FIG. 5 would rather improve when dried at a temperature around the fusing temperature of the binder. Accordingly, the conductive layer 105 can be dried at high temperature, and thus productivity can be remarkably improved.

Hereinafter, each of the constitutional elements will be explained in detail.

### <Metal Foil>

As the metal foil 103 of the present embodiment, various metal foils for the secondary batteries or for the capacitors can be used. Specifically, various metal foils for the positive electrodes and for the negative electrodes can be used. For example, foils of aluminum, copper, stainless steel, nickel and the like can be used. Among these, foils of aluminum and copper are preferable in terms of the balance between conductivity and cost. Here, in the present specification, aluminum means aluminum and aluminum alloy, and copper means pure copper and copper alloy. In the present embodiment, aluminum foil can be used for the positive electrode of a secondary battery, negative electrode of a secondary battery, or for the electrode of a capacitor. On the other hand, copper foil can be used for the negative electrode of the secondary battery. There is no particular limitation regarding the type of the aluminum foil. Here, pure aluminum, such as A1085 series aluminum, A3003 series aluminum and the like can be used. The same can be said with the copper foil, and thus there is no particular limitation. Here, rolled copper foil and electrolytic copper foil are preferably used.

There is no particular limitation regarding the thickness of the metal foil 103, and the thickness is adjusted depending on its intended usage. Here, when it is used for a secondary battery, it is preferable that the thickness is 5µm or more and 50µm or less. When the thickness is less than 5µm, the strength of the foil would be insufficient, and thus there are cases where it becomes difficult to form the conductive layer and the like. On the other hand, when the thickness exceeds 50µm, other constituting elements, particularly the active material layer 115 or the electrode material layer need be made thinner. Especially when the metal foil is used as an electrical storage device of secondary batteries or capacitors and the like, this can result in cases where the thickness of the active material layer 115 need be thinned, resulting in insufficient capacity.

### <Conductive Layer>

The conductive layer 105 of the present embodiment is a PTC (Positive temperature coefficient) layer formed on the surface of the metal foil 103. The PTC layer has a thickness of 0.1 to 10µm and comprises the conductive material 111 and the binder material 107.

The thickness of the conductive layer 105 of the present embodiment is 0.1 to 10µm. When the thickness is less than 0.1µm, there are cases where the resistance cannot be increased sufficiently during abnormal heat generation, and thus shut down function cannot be realized certainly. On the other hand, when the thickness exceeds 10µm, the resistance at normal conditions would become high, thereby resulting in deterioration of battery characteristics during high rate operation. The thickness of the conductive layer 105 can be in the range of two values selected from the group consisting of 0.1, 0.3, 0.5, 1, 2, 5, and 10µm.

The melting point of the binder material 107 of the conductive layer 105 of the present embodiment is in the range of 80 to 180°C, due to the necessity of realizing the shut down function before the thermal runaway occurs. When the melting point is lower than 80°C, the shut down function will be realized even at normal temperature. On the other hand, when the melting point exceeds 180°C, the resistance would not immediately increase at abnormal heat generation, and thus the shut down function cannot be realized.

The melting point of the binder material 107 of the conductive layer 105 is, for example, 80, 90, 100, 110, 120, 130, 140, 150, 160, 170, or 180°C. Here, the melting point can be in the range of two values selected from the values exemplified above. When there is only one endothermic peak in the heating curve of DSC measurement, the endothermic peak is taken as the melting point. On the other hand, when there is a plurality of endothermic peaks, the temperature at which the maximum endothermic peak appears in the heating curve is taken as the melting point.

In addition, the binder material 107 of the conductive layer 105 of the present embodiment preferably shows only one endothermic peak in the heating curve when differential scanning calorimetry (DSC) is carried out in the temperature range from normal temperature (50°C for example) to 200°C. Here, the number of the endothermic peak in the heating curve shall be one or more, and can be 1, 2, 3, 4, 5, 6, 7, 8, 9, or 10 for example. The number of peaks can be in the range of two values selected from the values exemplified above. In addition, when there is two or more endothermic peaks in the heating curve, the difference between the peaks can be 15, 20, 25, 30, or 35°C or more.

In addition, the binder material 107 of the conductive layer 105 of the present embodiment shows a maximum exothermic peak in the cooling curve after crystal melting in the temperature range of 50 to 160°C, when differential scanning calorimetry (DSC) is carried out. When the peak is found at a temperature below 50°C, the shut down function will be realized even at normal temperature, or the shut down function will not be realized since the crystalinity is low and thus the change in the resistance is small. On the other hand, when the peak is found at a temperature exceeding 160°C, the resistance would not immediately increase at abnormal heat generation, and thus the shut down function cannot be realized. The maximum exothermic peak in the cooling curve after crystal melting measured by differential scanning calorimetry (DSC) is found, for example, at 50, 60, 70, 80, 90, 100, 110, 120, 130, 140, 150, or 160°C. Here, the peak can be in the range of two values selected from the values exemplified above.

In addition, the half width of the maximum exothermic peak for the binder material 107 of the conductive layer 105 of the present embodiment is 10°C or less. When the half width exceeds 10°C, the increase in the resistance would not be sufficient, and thus the shut down function would not be realized. The half width of the maximum exothermic peak is, for example, 10, 9, 8, 7, 6, 5, 4, 3, 2, or 1°C or less. Here, the half width can be in the range of two values selected from the values exemplified above.

Here, in FIG. 6, a definition of the true height and the half width are shown for the case of single peak. That is, in the present specification, half width means the full width at half maximum (FWHM), and does not mean the half width at half maximum (HWHM). However, when a plurality of peaks are overlapped (especially when a component having a wide half width is included), the definition of the half width becomes unclear. Accordingly, FIG. 7 is provided to show the definition for the case where the plurality of peaks are overlapped. As seen in FIG. 7, regarding a sample having a plurality of overlapped exothermic peaks (change in resistance is small), the half width is obtained not from the maximum exothermic peak obtained by curve fitting using Gaussian function and the like, but rather from the shape as shown in FIG. 7.

As mentioned above, the shut down function need be realized before the thermal runaway occurs. Therefore, the melting point of the binder material 107 used for the PTC layer shall be 180°C or lower. Here, when preparing a PTC layer having a thickness of 0.1 to 10µm by using the crystalline resin having a melting point of 180°C or lower, it is preferable to use polymer particles having small grain size corresponding to the thickness of the layer.

Accordingly, although there is no particular limitation regarding the number average particle diameter for the crystalline particles used as the binder material 107, the number average particle diameter is usually 0.001 to 10µm, preferably 0.01 to 5µm, and more preferably 0.1 to 2µm. When the number average particle diameter is in such range, a uniform layer having a thickness of 10µm or less can be formed, and an excellent biding strength can be provided with small amount of usage. The number average particle diameter of the crystalline particles is, for example, 0.001, 0.005, 0.01, 0.05, 0.1, 0.5, 1, 2, 5, or 10µm. Here, the number average particle diameter can be in the range of two values selected from the values exemplified above.

From a different point of view, when the crystalline particles having the number average particle diameter of 10µm or less is used as the bonder material 107, the crystalline particles can be dispersed in the solvent when the crystalline particles are unable to be dissolved in the solvent. Accordingly, the crystalline particles can be dispersed in the conductive layer 105 uniformly. Therefore, even when the conductive material is dispersed in the PTC layer non-uniformly, there is hardly any portion where the conductive network is not cut off (portion where the crystalline particles are not distributed) at the realizing temperature of the PTC function. As a result, there is hardly any portion where conduction remains even at the realizing temperature of the PTC function, and thus the shut down function is realized suitably.

Here, the number average particle diameter is obtained by measuring the diameter for 100 binder particles selected randomly from the image of transmission electron microscope, and then calculating the arithmetic mean value. There is no particular limitation regarding the particle shape, and can be either one of a sphere and an irregular shape. These binders can be used alone or two or more types of these binders can be used in combination.

There is no particular limitation regarding the crystalline particles used as the binder material 107. Here, polyethylene particles, polypropylene particles, acid modified polyethylene particles, acid modified polypropylene particles, ethylene/glycidyl methacrylate copolymer particles, ethylene/vinyl acetate copolymer particles, ethylene/(meth)acrylic acid copolymer particles, ethylene/(meth)acrylic acid ester copolymer particles can be used. These crystalline particles can be cross-linked. In addition, two or more types of these crystalline particles can be mixed and used.

There is no particular limitation regarding the acid used to modify polypropylene and polyethylene, and carboxylic acid can be mentioned for example. As the carboxylic acid, unsaturated carboxylic acid and derivatives thereof can be mentioned for example. Specifically, acrylic acid, methacrylic acid, maleic acid, fumaric acid, itaconic acid, maleic anhydride, itaconic anhydride, methyl acrylate, methyl methacrylate, ethyl acrylate, butyl acrylate, acrylamide, and maleimide can be mentioned for example.

The crystalline particles used as the binder material 107 preferably contains 1 or more types of components selected from the group consisting of a component having an epoxy group, a component having a carboxyl group, and a component having a carboxyl anhydride group. When the crystalline particles contain the afore-mentioned component, sufficient adhesion with the metal foil 103 can be obtained, and an aggregation structure with the conductive material such as carbon particles, contributing to high PTC characteristics, can be obtained. It is preferable to use the crystalline particles in a condition where the crystalline particles are dispersed in water (emulsion). More preferably, an emulsion of acid modified polyethylene particles, acid modified polypropylene, or ethylene/glycidyl methacrylate copolymer particles is used. By using the emulsion, the crystalline particles can be dispersed uniformly. Accordingly, desired PTC characteristics can be realized certainly.

In one example of the method for preparing the emulsion, the resin is dissolved in an organic solvent incompatible with water, followed by addition of emulsifier and water to obtain an emulsion. Then, the organic solvent is removed. In another example, a mixture of the resin, emulsifier, and water is heated to above the melting point of the resin by keeping water in a liquid state using a pressure vessel, followed by agitation to obtain an emulsion. There is no particular limitation regarding the manufacturing method of the emulsion used in the present embodiment, so long as the emulsion has a grain size of 10µm or less and is dispersed stably in liquid.

The crystallinity has an influence on the PTC characteristics of the conductive layer 105 of the present embodiment. Therefore, it is preferable that the crystalline particles used as the binder material 107 contains ethylene or propylene by 80% (mass%) or more. In addition, it is preferable that the crystalline particles shows a maximum exothermic peak in the cooling curve in the temperature range of 50 to 160°C after crystal melting, when differential scanning calorimetry (DSC) is carried out, and the half width of the maximum exothermic peak is 10°C or less. When the crystalline particles have such characteristics, high PTC characteristics can be obtained since the conductive network is cut off remarkably when the temperature exceeds the melting point.

It is preferable that the molecular weight of the crystalline particles used as the binder material 107 is 5x10⁴ or more. When the molecular weight of the crystalline particles is 5x10⁴ or more, high PTC characteristics can be obtained even with a layer having a thickness of 10µm or less.

There is no particular limitation regarding the formulation amount of the binder material 107. Here, the formulation amount is preferably adjusted so that the volume % of the binder material 107 is 50 to 90% when the entirety of the conductive layer 105 is taken as 100%. When the formulation amount of the binder material 107 is too large, the contacting point between the conductive materials 111 would be less, and thus the electrical resistance at normal temperature would become high. On the other hand, when the formulation amount of the binder material 107 is too small, the contact between the conductive materials 111 would be maintained even at elevated temperature, and thus the shut down function would become difficult to be realized. The formulation amount of the binder material 107 is, for example, 50, 55, 60, 65, 70, 75, 80, 85, or 90%. Here, the formulation amount of the binder material 107 can be in the range of two values selected from the values exemplified above.

When the crystalline polymer used as the binder material 107 is in the form of particles, the contacting area between the inorganic non-conducting material 109 and the binder material 107 can be increased by melting the particles after forming the layer, and is thus preferable since a sufficient mechanical strength can be obtained. When the particles are not fused, the particles can move upon application of pressure, depending on the grain size and particle shape. In such cases, sufficient shut down function cannot be realized when the battery cell is deformed. Specifically, it is preferable to fuse the particles by performing a drying step after forming the conductive layer 105. The drying step shall be performed in the temperature range of 80 to 180°C, which includes the melting point of the binder material 107. The drying temperature is, for example, 80, 90, 100, 110, 120, 130, 140, 150, 160, 170, or 180°C. Here, the drying temperature can be in the range of two values selected from the values exemplified above.

There is no particular limitation regarding the inorganic non-conductive material 109 used in the conductive layer of the present embodiment. Here, particles of oxides such as silica, alumina, titanium oxide, and barium titanate; particles of nitrides such as aluminum nitride and silicon nitride; particles of ionic crystals such as calcium fluoride and barium sulfate; particles of covalently bonded crystals such as silicone and diamond; and particles of clay such as montmorillonite can be mentioned for example. It is preferable that the non-conductive material is dispersed uniformly in the dispersing medium. Aggregation of the non-conductive material during layer formation can be suppressed when the non-conductive materials are dispersed uniformly in the dispersing medium. The shape of the non-conductive material can be any one of spheres, fibers, needles, flakes, plates, and powders. Here, it is preferable that the shape of the non-conductive material is a sphere. When the non-conductive material is sphere shaped, resin strength can be maintained since there would be no orientation.

There is no particular limitation regarding the number average particle diameter of the inorganic non-conductive material 109. Usually, the number average particle diameter is 0.001 to 10µm, preferably 0.01 to 5µm, and further preferably 0.1 to 2µm. When the number average particle diameter of the inorganic non-conductive material 109 is in such range, the contacting area between the binder material 107 and the inorganic non-conducting material 109 can be increased, and is thus preferable since the mechanical strength of the conductive layer 105 can be improved. Accordingly, sufficient shut down function can be realized even when the battery cell is deformed. When the number average particle diameter of the inorganic non-conductive material 109 is larger than this range, the active material in the active material layer 115 would crush the conductive layer 105 when the battery cell is deformed. Accordingly, the shut down function would not be realized. The number average particle diameter of the inorganic non-conductive material 109 is, for example, 0.001, 0.005, 0.01, 0.05, 0.1, 0.5, 1, 2, 5, or 10µm. Here, the number average particle diameter can be in the range of two values selected from the values exemplified above.

Here, the number average particle diameter of the inorganic non-conductive material 109 is obtained by measuring the diameter for 100 particles of the inorganic non-conductive material 109 selected randomly from the image of transmission electron microscope, and then calculating the arithmetic mean value. There is no particular limitation regarding the particle shape, and can be either one of a sphere or an irregular shape. These inorganic non-conductive materials 109 can be used alone or two or more types of these inorganic non-conductive materials 109 can be used in combination.

There is no particular limitation regarding the formulation amount of the inorganic non-conductive material 109. Here, the formulation amount is preferably adjusted so that the volume % of the inorganic non-conductive material 109 is 5 to 30% when the entirety of the conductive layer 105 is taken as 100%. When the formulation amount of the inorganic non-conductive material 109 is too small, sufficient mechanical strength cannot be obtained, and thus the shut down function cannot be realized when the battery cell is deformed. On the other hand, when the formulation amount of the inorganic non-conductive material 109 is too large, the change in the resistance would become small, and thus the shut down function cannot be realized. The formulation amount (volume %) of the inorganic non-conductive material 109 is, for example, 5, 10, 15, 20, 25, or 30%. Here, the formulation amount of the inorganic non-conductive material 109 can be in the range of two values selected from the values exemplified above.

As the conductive material 111 used in the conductive layer 105 of the present embodiment, known conductive materials such as carbon powders and metal powders can be used. Among these, carbon black such as furnace black, acetylene black, and Ketchen black is preferable. In particular, the one having an electrical resistance of 1x10⁻¹Ω·cm or lower by the powder form, the powder being a pressurized powder body of 100% pressurized powder body, is preferable. The aforementioned particles can be used in combination as necessary. There is no particular limitation regarding the particle size. Here, 10 to 100nm is generally preferable.

There is no particular limitation regarding the formulation amount of the conductive material 111. Here, the formulation amount is preferably adjusted so that the volume % of the conductive material 111 is 6 to 50% when the entirety of the conductive layer 105 is taken as 100%. When the formulation amount of the conductive material 111 is too small, the contacting point between the conductive materials 111 would become less, and thus the electrical resistance during normal condition would become high. On the other hand, when the formulation amount of the conductive material 111 is too large, the contact between the conductive materials 111 would be maintained even at elevated temperature, and thus the shut down function would become difficult to realize. The formulation amount of the conductive material 111 is, for example, 10, 15, 20, 25, 30, 35, 40, 45, or 50%. Here, the formulation amount of the conductive material 111 can be in the range of two values selected from the values exemplified above.

The conductive layer 105 of the present embodiment can be prepared by, for example, dissolving (or dispersing) the binder material 107 in a solvent, followed by adding and mixing the conductive material 111 and the inorganic non-conductive material 109 to give a paste. Subsequently, the paste is coated onto the metal foil 103 and is then dried. Here, there is no particular limitation regarding the solvent used, so long as the binder resin can be dissolved (or dispersed) and the conductive particles can be dispersed. Specifically, it is preferable that the conductive layer 105 is prepared by coating a composition containing a water borne dispersion (emulsion) of a crystalline polymer, the conductive material 111, and the inorganic non-conductive material 109 onto the metal foil 103.

In addition, there is no particular limitation regarding the coating method. Here, known methods such as the cast method, the bar coater method, the dip method, and the gravure coat method can be adopted. There is also no particular limitation regarding the drying method, and drying can be performed by heating treatment using a circulating hot air oven.

### <Active Material Layer>

The electrode 117 of the present embodiment comprises an active material layer 115 containing the active material, the active material layer 115 being formed on the conductive layer 105. Since the active material layer including the active material particles is provided on the current collector using the afore-mentioned current collector foil, the electrode 117 can achieve excellent discharge rate characteristics.

The active material particles contained in the active material layer 115 of the electrode 117 of the present embodiment can be either one of a positive electrode active material or a negative electrode active material. There is no particular limitation regarding the positive electrode active material for the positive electrode of the secondary battery. Here, it is preferable that the positive electrode active material can occlude and release lithium (ion). Specifically, the ones conventionally used, such as lithium cobalt oxide (LiCoO₂), lithium manganese (LiMn₂O₄), lithium nickel oxide (LiNiO₂), ternary lithium compound system of Co, Mn, and Ni (Li(CoₓMn_{y}Ni_{z})O₂), sulfur based compound (TiS₂), olivine based compounds (LiFePO₄) and the like can used.

As the negative electrode active material for the negative electrode of the secondary battery, the ones conventionally known can be used. Black lead-based compounds such as graphite, non-crystalline black lead-based compounds, and oxide based compounds can be used, and there is no particular limitation. Here, it is preferable to use the negative electrode active material in combination with an active material having a large volume expansion/contraction characteristics, such as an active material containing silicon.

As the active material used for the electrode of the electrical double layer capacitor, the ones conventionally known can be used. Black lead based compounds such as graphite, non-crystalline black lead-based compounds, and oxide based compounds can be used, and there is no particular limitation.

As the binder resin for binding the active materials, fluorine-based resins represented by PVDF (polyvinylidene difluoride), giant molecules of polysaccharide, and SBR can be used for example, and is not limited to these. In addition, the ones mentioned for the conductive layer can be also used.

The binder resin can be coated onto the conductive layer 105 by dissolving the binder resin in a solvent, or by mixing the binder resin with the active material particles and a conducting assistant. Then, the coated solution or the mixture is dried to structure the electrode 117.

The embodiments of the present invention have been described with reference to the Drawings. Here, they are merely an exemplification of the present invention, and the present invention can adopt various constituents other than those mentioned above.

For example, in the afore-mentioned embodiment, the conductive layer 105 was structured by coating a composition containing a water borne dispersion (emulsion) of the crystalline polymer, the conductive material 111, and the inorganic non-conductive material 109 onto the metal foil 103. However, there is no intension to limit the present invention to such embodiment. For example, the one soluble in organic solvent can be used as the crystalline polymer. In such case, one or more types of the crystalline polymers selected from the group consisting of a homopolymer of vinylidene difluoride, a copolymer containing vinylidene difluoride by 40% or more, and a crystalline polyester, can be used as the crystalline polymer. Even when such alteration is made, the use of the inorganic non-conductive material 109 allows achievement of the effects as described in the aforementioned embodiments.

### EXAMPLES

Hereinafter, the present invention will be described in detail with reference to Examples. However, the present invention shall not be limited to these Examples.

### <Example 1>

Resin A (acid modified polypropylene emulsion, melting point of 138.6°C, solid content of 29.5%, number average particle diameter of 0.3µm, and weight average molecular weight of 80000), acetylene black (hereinafter referred to as AB), and silica (colloidal silica, grain size of 450nm, solid content of 40%) were mixed, followed by dispersion using disper, thereby obtaining a coating solution (resin A : AB : silica = 85:10:5 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin A with respect to the A 1085 foil was superior (no unevenness was found by visual observation with naked eye).

### <Example 2>

Resin A, AB, and silica (colloidal silica, grain size of 450nm, solid content of 40%) were mixed, followed by dispersion using disper, thereby obtaining a coating solution (resin A : AB : silica = 80:10:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin A with respect to the A 1085 foil was superior (no unevenness was found by visual observation with naked eye).

### <Example 3>

Resin A, AB, and alumina (alumina fine particles, grain size of 700nm) were mixed, followed by dispersion using disper, thereby obtaining a coating solution (resin A : AB : alumina = 80:10:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin A with respect to the A 1085 foil was superior (no unevenness was found by visual observation with naked eye).

### <Example 4>

Resin B (acid modified polypropylene emulsion, melting point of 137.4°C, solid content of 30.1%, number average particle diameter of 0.3µm, and weight average molecular weight of 20000), AB, and silica (colloidal silica, grain size of 450nm, solid content of 40%) were mixed, followed by dispersion using disper, thereby obtaining a coating solution (resin B : AB : silica = 80:10:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin B with respect to the A 1085 foil was superior (no unevenness was found by visual observation with naked eye).

### <Example 5>

Resin C (ethylene/glycidyl methacrylate copolymer, melting point of 89.2°C, solid content of 40.2%, and number average particle diameter of 1.5µm), AB, and silica (colloidal silica, grain size of 450nm, solid content of 40%) were mixed, followed by dispersion using disper, thereby obtaining a coating solution (resin C : AB : silica = 80:10:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 3.2µm was obtained. Here, the coatability of the emulsion of resin C with respect to the A 1085 foil was superior (no unevenness was found by visual observation with naked eye).

### <Example 6>

Resin D (acid modified polypropylene emulsion, melting point of 159.3°C, solid content of 30.0%, number average particle diameter of 0.3µm, and weight average molecular weight of 60000), AB, and silica (colloidal silica, grain size of 450nm, solid content of 40%) were mixed, followed by dispersion using disper, thereby obtaining a coating solution (resin D : AB : silica = 80:10:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin D with respect to the A 1085 foil was superior (no unevenness was found by visual observation with naked eye).

### <Comparative Example 1>

Resin A and AB were mixed, followed by dispersion using disper, thereby obtaining a coating solution (resin A : AB = 90:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.1µm was obtained. Here, the coatability of the emulsion of resin A with respect to the A 1085 foil was superior (no unevenness was found by visual observation with naked eye).

### <Comparative Example 2>

Resin B and AB were mixed, followed by dispersion using disper, thereby obtaining a coating solution (resin B : AB = 90:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.3µm was obtained. Here, the coatability of the emulsion of resin B with respect to the A 1085 foil was superior (no unevenness was found by visual observation with naked eye).

### <Comparative Example 3>

Resin C and AB were mixed, followed by dispersion using disper, thereby obtaining a coating solution (resin C : AB = 90:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.3µm was obtained. Here, the coatability of the emulsion of resin C with respect to the A 1085 foil was superior (no unevenness was found by visual observation with naked eye).

### <Comparative Example 4>

Resin D and AB were mixed, followed by dispersion using disper, thereby obtaining a coating solution (resin D : AB = 90:10 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.3µm was obtained. Here, the coatability of the emulsion of resin D with respect to the A 1085 foil was superior (no unevenness was found by visual observation with naked eye).

### <Comparative Example 5>

Resin E (aquatech AC3100, solid content of 45%, number average particle diameter of 0.7µm, available from JCR Co. Ltd.), AB, and silica (colloidal silica, grain size of 450nm, solid content of 40%) were mixed, followed by dispersion using disper, thereby obtaining a coating solution (resin E : AB : silica = 85:10:5 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin E with respect to the A 1085 foil was superior (no unevenness was found by visual observation with naked eye).

### <Comparative Example 6>

Resin F (polyethylene wax emulsion, solid content of 34.9%, number average particle diameter of 0.6µm, and weight average molecular weight of 8000), AB, and silica (colloidal silica, grain size of 450nm, solid content of 40%) were mixed, followed by dispersion using disper, thereby obtaining a coating solution (resin F : AB : silica = 85:10:5 by volume ratio, water medium). The coating solution thus obtained was coated onto A 1085 foil (thickness of 15µm) so that the coating thickness would be 2µm. The coating was then dried at 100°C for 1 minute or 140°C for 1 minute. Accordingly, a CC foil having a thickness of 2.2µm was obtained. Here, the coatability of the emulsion of resin F with respect to the A 1085 foil was superior (no unevenness was found by visual observation with naked eye).

### <Measurement of Melting Point>

The melting point of the resin after vacuum drying was measured in accordance with JIS K7121 using the differential scanning calorimeter (DSC60-A) available from Shimadzu Corporation. The results are shown in Table 1. When there was only one endothermic peak in the heating curve, the temperature of such peak was taken as the melting point. When there were two or more peaks, the temperature of the maximum endothermic peak was taken as the melting point.

### <Exothermic Peak Temperature in Cooling Curve>

In a case where the temperature was below 200°C when the melting point was measured, the temperature was first raised to 200°C by the programming rate of 10°C/min. Subsequently, the temperature was decreased by 10°C/min, and the exothermic peak temperature and half width was measured in the temperature range of 200 to 50°C.

When there was only one exothermic peak in the cooling curve, the temperature of such peak was taken as the "maximum exothermic peak". The "true height" of the peak was defined as follows. A perpendicular line was drawn from the top of the peak towards the base line of the exothermic curve. Then, the length of the line segment from the top of the peak to the intersection of the perpendicular line and the base line was defined as the "true height" of the peak.

When there were two or more exothermic peaks, the peak having the highest "true height" defined as above was taken as the "maximum exothermic peak". Here, the "maximum exothermic peak" and the "true height" were defined in a similar manner as above. The "half width" was defined as the width of the temperature range where the exothermic curve exists above the intermediate point of the line segment corresponding to the "true height".

[Table 1]

**Table 1**

| Resin | Cooling Curve | | Heating Curve | |
|---|---|---|---|---|
| | exothermic peak temperature (°C) | half width (°C) | melting point (°C) | number of endothermic peaks |
| A | 95.6 | 4.5 | 138.6 | 1 |
| B | 91.2 | 7 | 137.4 | 1 |
| C | 71.6 | 4.4 | 89.2 | 2 or more |
| D | 112.5 | 3.8 | 159.3 | 1 |
| E | 74 | 5 | 89.3 | 2 or more |
| F | 97.1 | 24.9 | 106.3 | 2 or more |

### <Measurement Method of Non-conductive Material Grain Size>

Grain size of the non-conductive material was observed with the samples obtained by vacuum drying each of the non-conductive materials, using transmission electron microscope (TEM). The number average particle diameter of was obtained by measuring the diameter for 100 particles selected randomly during the TEM observation, and then calculating the arithmetic mean value. The results are shown in Table 2.

[Table 2]

**Table 2**

| | resin | | non-conductive filler | | |
|---|---|---|---|---|---|
| | type of resin | fraction (vol%) | type | grain size | fraction(vol%) |
| Example 1 | A | 85 | colloidal silica | 450 | 5 |
| Example 2 | A | 80 | colloidal silica | 200 | 10 |
| Example 3 | A | 80 | alumina | 700 | 10 |
| Example 4 | B | 80 | colloidal silica | 450 | 10 |
| Example 5 | C | 80 | colloidal silica | 450 | 10 |
| Example 6 | D | 80 | colloidal silica | 450 | 10 |
| Comparative Example 1 | A | 90 | - | - | - |
| Comparative Example 2 | B | 90 | - | - | - |
| Comparative Example 3 | C | 90 | - | - | - |
| Comparative Example 4 | D | 90 | - | - | - |
| Comparative Example 5 | E | 85 | colloidal silica | 450 | 5 |
| Comparative Example 6 | F | 85 | colloidal silica | 450 | 5 |

The symbol of "-" above means that non-conductive filler is not contained.

### <Evaluation of PTC Characteristics>

A circle of 1cmΦ was punched out from the CC foil to prepare a testing sample. The sample was sandwiched in between brass electrodes, and the resistance was measured at 30°C with the load of 15N, using an ohmmeter (HIOKI 3451). Here, the initial resistance was taken as R₀. Subsequently, the temperature was raised from 30 to 200°C at the rate of 10°C/min, and the resistance at each of the temperatures was measured. Accordingly, a temperature-resistance curve was obtained. Here, regarding the resistance R_{(T)} at temperature T and the resistance R_{(T-5)} at temperature T-5°C, a temperature higher than a temperature satisfying the relation of (R_{(T)}/R_{(T-5)}) > 2.0 and first satisfying the relation of (R_{(T)} /R_{(T-5)}) < 2.0 was taken as Ta, and R_{(Ta+5)}/R_{(Ta-5)} was obtained from the resistance R_{(Ta+5)} at temperature Ta+5°C and the resistance R_{(Ta-5)} at temperature Ta-5°C. In addition, the highest resistance observed in the temperature range of the measurement was taken as maximum resistance Rmax. The results are shown in Tables 3 and 4. Here, the graph showing the experimental results of Comparative Example 1 is shown in FIG. 3 (drying temperature of 100°C : PTC maginification of 58.1) and FIG. 4 (drying temperature of 140°C : PTC maginification of 28.2). In addition, the graph showing the experimental results of Example 1 is shown in FIG. 10 (drying temperature of 100°C : PTC maginification of 20.5) and FIG. 11 (drying temperature of 140°C : PTC maginification of 64.0).

### <Overcharge Test>

### (1) Preparation of Electrode)

### (Positive Electrode)

An active material composition paste (LiMn₂O₄ : AB : PVDF : NMP (N-methyl-2-pyrrolidone) = 89.5:5:5.5:100, by weight ratio) was coated onto the current collector having the conductive layer prepared by the afore-mentioned procedure, the thickness of the coating being set to 200µm. Subsequently, the coating was dried at 120°C for 10 minutes, and then roll press was applied to the coating so that the thickness of the composition layer would be 60µm.

### (Negative Electrode)

An active material composition paste (MCMB (mesocarbon microbeads) : AB : PVDF : NMP = 93:2:5:100, by weight ratio) was coated onto a copper foil (10µm thickness), the thickness of the coating being set to 200µm. Subsequently, the coating was dried, and then roll press was applied to the coating so that the thickness of the composition layer would be 40µm.

### (Preparation of Laminated Lithium Ion Battery)

The positive electrode and negative electrode as prepared and a cellulose separator were punched out for preparing a monolayer laminate cell. The positive electrode and the negative electrode were punched out with the size of 30 x 40mm² so as to have a flag-like shape combined with the tab. Here, the separator had a size slightly larger than the positive electrode and the negative electrode in order to prevent short-circuit. These electrodes and an electrolyte solution (1M LiPF₆, EC (ethylene carbonate) : MEC (methyl ethyl carbonate) = 3:7) were placed in an envelope type aluminum laminate film, and was then sealed using a vacuum packaging machine (SV-150, available from TOSEI Corporation).

### (Overcharge Test)

The afore-mentioned battery was charged to 4.2V at 1.5 mA/cm² by constant current and constant voltage. Then, the fully charged battery was further charged until it reaches the charging degree of 250% at 4.5 mA/cm² with an upper limit voltage of 12V. Then, the battery was observed to see whether the cell has expanded or not. The thickness of the cell was measured using a microgauge and the like. When the expansion of the cell compared with the initial thickness of the cell was less than 100µm, the evaluation was determined as "A". When the expansion was 100µm or more and less than 1000µm, the evaluation was determined as "B". When the expansion was 1000µm or more, the evaluation was determined as "C". The results are shown in Tables 3 and 4. Here, the measurement was carried out by applying a pressure of 1 MPa to the battery.

**Table 3**

| | drying temperature : 100°C | | | |
|---|---|---|---|---|
| | temperature of Rmax (°C) | Rmax/R₀ | R_{(Ta+5)}/R_{(Ta-5)} | overcharge test |
| Example 1 | 142.2 | 20.5 | 1.08 | B |
| Example 2 | 146.1 | 33.8 | 1.85 | A |
| Example 3 | 145.3 | 45.0 | 1.95 | A |
| Example 4 | 141.2 | 23.2 | 1.40 | A |
| Example 5 | 95.2 | 50.0 | 1.30 | A |
| Example 6 | 161.3 | 119 | 2.50 | A |
| Comparative Example 1 | 140.6 | 58.1 | 0.213 | C |
| Comparative Example 2 | 140.2 | 40.5 | 0.104 | C |
| Comparative Example 3 | 93.5 | 40 | 0.0832 | C |
| Comparative Example 4 | 161 | 131 | 0.351 | C |
| Comparative Example 5 | 92.2 | 5.0 | - | C |
| Comparative Example 6 | - | - | - | C |

| | | | | |
|---|---|---|---|---|
| A: less than 100µm B: 100µm or more and less than 1000µm C: 1000µm or more | | | | |

The symbol of "-" in the Rmax means that Rmax was not observed with the sample using polyethylene wax, since the resistance continued to decrease when the resistance was measured under high load.

The symbol of "-" in the Rmax/R₀ means that calculation of Rmax/R₀ was not possible since Rmax was not observed.

The symbol of "-" in the R_{(Ta+5)}/R_{(Ta-5)} means that calculation of R_{(Ta+5)}/R_{(Ta-5)} was not possible since Ta was not obtained.

[Table 4]

**Table 4**

| | drying temperature : 140°C | | | |
|---|---|---|---|---|
| | temperature of Rmax (°C) | Rmax/R₀ | R_{(Ta+5)}/R_{(Ta-5)} | overcharge test |
| Example 1 | 149.9 | 64.0 | 1.73 | A |
| Example 2 | 154.4 | 44.7 | 3.02 | A |
| Example 3 | 146.3 | 60.5 | 3.20 | A |
| Example 4 | 142.3 | 43.5 | 2.20 | A |
| Example 5 | 97.3 | 50.8 | 2.10 | A |
| Example 6 | 163.5 | 132.0 | 3.50 | A |
| Comparative Example 1 | 146.4 | 28.2 | 0.541 | C |
| Comparative Example 2 | 142.5 | 23.2 | 0.323 | C |
| Comparative Example 3 | 96.5 | 14.5 | 0.154 | C |
| Comparative Example 4 | 163 | 50.3 | 0.603 | C |
| Comparative Example 5 | 95.7 | 7.21 | - | C |
| Comparative Example 6 | - | - | - | C |

| | | | | |
|---|---|---|---|---|
| A: less than 100µm B: 100µm or more and less than 1000µm C: 1000µm or more | | | | |

The symbol of "-" in the Rmax means that Rmax was not observed with the sample using polyethylene wax, since the resistance continued to decrease when the resistance was measured under high load.

The symbol of "-" in the Rmax/R₀ means that calculation of Rmax/R₀ was not possible since Rmax was not observed.

The symbol of "-" in the R_{(Ta+5)}/R_{(Ta-5)} means that calculation of R_{(Ta+5)}/R_{(Ta-5)} was not possible since Ta was not obtained.

### <Discussion of Results>

From the experimental results of the Examples and Comparative Examples, it can be understood that resistivity increase during the drying step of the conductive layer can be prevented, by using the current collector containing the inorganic non-conducting material in the conductive material. Here, such effect is obtained since the inorganic non-conducting material added to the current collector suppresses the migration of the conductive material when the emulsion is fused. In addition, the mechanical strength can be increased, and thus excellent PTC characteristics can be obtained even when deformation such as bending occurs.

On the other hand, when the internal temperature of the secondary battery or the capacitor reaches near the melting point of the binder material due to the heat generation when the secondary battery or the capacitor is overcharged, the binder material would expand, thereby cutting off the conductive pathway of the conductive materials. Accordingly, the resistance of the conductive layer increases steeply, and the inorganic non-conductive material would suppress the migration of the conductive material during temperature increase, resulting in prevention of the re-aggregation of the conductive material. Therefore, the current between the current collector and the active material layer is cut off. It can be understood that the usage of this current collector can achieve high productivity as well as realize sufficient safety function even when overcharging occurs in a condition where the cell is deformed due to the external force applied to the secondary battery or the capacitor, or in a condition where the internal pressure is increased. Here, since the resistance increased slowly in Comparative Example 5, temperature corresponding to Ta was not observed. In addition, since the resistance did not increase in Comparative Example 6, temperature corresponding to Ta was not observed. Here, regarding Comparative Example 6, Rmax was not obtained when the resistance was measured under high load, since the resistance continuously decreased when polyethylene wax was used.

The present invention has been explained with reference to Examples. These Examples are provided merely as an exemplification, and it should be understood by the person having ordinary skill in the art that various modification can be made, and such modified examples are in the scope of the present invention.

### EXPLANATION OF SYMBOLS

- 100: current collector
- 103: metal foil
- 105: conductive layer
- 107: binder material
- 109: inorganic non-conductive material
- 111: conductive material
- 115: active material layer
- 117: electrode

## Claims

1. A current collector, comprising:
a metal foil; and
a conductive layer formed on a surface of the metal foil; wherein:
a temperature-resistance curve of the current collector obtained by sandwiching the current collector in between brass electrodes of 1cm diameter, the measurement of resistance being performed with conditions of 15N of load between the electrodes and temperature being raised from ambient temperature at a rate of 10°C/min satisfies a relation of R_{(Ta+5)}/R_{(Ta-5)} ≥ 1, R_{(Ta+5)} being resistance at temperature Ta+5°C and R_{(Ta-5)} being resistance at temperature Ta-5°C, Ta being a temperature higher than a temperature satisfying a relation of (R_{(T)} /R_{(T-5)}) > 2.0 and first satisfying a relation of (R_{(T)}/R_{(T-5)}) < 2.0.

2. The current collector of Claim 1, wherein:
the binder material has a melting point in a temperature range of 80 to 180°C; and
the binder material has one or more exothermic peak in a cooling curve obtained by differential scanning calorimetry (DSC) carried out from ambient temperature to 200°C; wherein
in a case where there is one exothermic peak, the exothermic peak is in a temperature range of 50 to 120°C and a half width of the exothermic peak is 10°C or less; or
in a case where there are two or more exothermic peaks, the maximum exothermic peak is in a temperature range of 50 to 120°C and a half width of the maximum exothermic peak is 10°C or less.

3. The current collector of Claim 1 or 2, wherein:
the conductive layer comprises a conductive material, an inorganic non-conductive material, and a binder material;
the inorganic non-conductive material has a grain size of 10µm or less; and
the binder material comprises a crystalline polymer.

4. The current collector of Claim 3, wherein the inorganic non-conductive material is silica or alumina.

5. The current collector of Claim 3 or 4, wherein the crystalline polymer is particles having a number average particle diameter of 10µm or less.

6. The current collector of any one of Claims 3 to 5, wherein the crystalline polymer comprises one or more crystalline polymer selected from the group consisting of polyethylene particles, polypropylene particles, acid modified polyethylene particles, acid modified polypropylene particles, ethylene/glycidyl methacrylate copolymer particles, ethylene/vinyl acetate copolymer particles, ethylene/(meth)acrylic acid copolymer particles, polyvinylidene difluoride particles, and ethylene/(meth)acrylic acid ester copolymer particles.

7. The current collector of any one of Claims 3 to 6, wherein the crystalline polymer comprises one or more component having one or more types of hydrophilic group selected from the group consisting of an epoxy group, a carboxyl group, and a carboxyl anhydride group.

8. The current collector of any one of Claims 3 to 7, wherein the conductive layer is prepared by coating a composition comprising a water borne dispersion (emulsion) of the crystalline polymer, the conductive material, and the inorganic non-conductive material; onto the metal foil.

9. The current collector of any one of Claims 3 to 8, wherein the crystalline polymer is soluble in an organic solvent.

10. The current collector of Claim 3 or 4, wherein the crystalline polymer comprises one or more crystalline polymer selected from the group consisting of a homopolymer of vinylidene difluoride, a copolymer containing vinylidene difluoride by 40% or more, and a crystalline polyester.

11. An electrode, comprising:
the current collector of any one of Claims 1 to 10; and
an active material layer comprising an active material, the active material layer formed on the conductive layer of the current collector.

12. A lithium secondary battery, comprising the current collector of any one of Claims 1 to 10.

13. A non-aqueous lithium secondary battery, comprising the current collector of any one of Claims 1 to 10.

14. An electrical double layer capacitor, comprising the current collector of any one of Claims 1 to 10.

15. A lithium ion capacitor, comprising the current collector of any one of Claims 1 to 10.

16. A vehicle or an aircraft, installed with the capacitor or the secondary battery of any one of Claims 12 to 15.
